# EUROPEAN PATENT SPECIFICATION

(11) **EP 0 499 599 B1**
(45) Date of publication and mention of the grant of the patent: **21.07.1999**
(21) Application number: 92870024.4
(22) Date of filing: 07.02.1992
(51) Int. Cl.: C08F 6/10, C08F 12/00

(54) **Reduction of polymerisation inhibitor in recycle streams**
Reduzierung der Polymerisationsinhibitoreinheit in Recyclagestrom
Réduction d'inhibiteur de polymérisation dans le circuit de recyclage

(30) Priority: 11.02.1991 US 653529; 11.02.1991 US 653210; 11.02.1991 US 653528; 08.02.1991 US 652688
(43) Date of publication of application: 19.08.1992
(73) Proprietor: FINA TECHNOLOGY, INC., Plano, Texas 75024 (US)
(72) Inventor: Sosa, Jose M., Deer Park, Texas 79720 (US); Beisert, Stan, Houston, Texas 77062 (US)
(74) Representative: Leyder, Francis

(56) References cited:
- BE-A- 1 002 326
- FR-A- 2 220 545
- GB-A- 878 438

## Description

### FIELD OF THE INVENTION

This invention relates to processes for polymerizing monomers such as monovinyl aromatic compounds, including styrenes, alpha-methyl styrenes, and ring-substituted styrenes; and more particularly involves methods and apparatus for removing acid species and other undesirable compounds from the recycle subsystems in polymerization systems.

### BACKGROUND OF THE INVENTION

In the field of polymers, one of the most widely manufactured classes of polymers is that encompassing polymerized monovinyl aromatic compounds such as styrenes, alpha-methyl styrenes, and ring-substituted styrenes. Of this class, the most colon members are normal polystyrene, and rubber-modified polystyrene - often called high impact polystyrene or HIPS.

In the continuous process of polymerizing styrene monomer into polystyrene and HIPS, a common process of carrying out the polymerization is through the use of polymerization initiators such as t-butyl peroxybenzoate and dibenzyl peroxide. One disadvantage of using such initiators is that a by-product of the polymerization process using these initiators is acid decomposition by-products, such as benzoic acid, which acidic species then react with the initiator and, as a consequence, inhibit further polymerization, when recycled with unreacted monomer back into the polymerization reactors.

One method of handling this problem is that disclosed in U.S. Patent 4,857,587 to Sosa, et al, the entire disclosure of which is hereby incorporated by reference into this application. In the Sosa patent, recycled unreacted monomer is passed through a recycle treatment vessel to remove acidic species. The vessel would normally contain an adsorbent material such as alumina or clay to remove a major portion of the acid component from the recycle stream.

French patent FR-A-2,220,545 discloses a process for purification and recuparation of alkenylaromatic monomer in the continuous production of HIPS using 2 devols in series. All the products of the 2 devols are recycled back into the polymerization stream, thus reinjecting concentrated contaminants which tend to deactivate the catalyst.

Other methods of reducing the effect of acid decomposition by-products are disclosed in the two Sosa et al patents, U.S. 4,777,210 and 4,861,827, the disclosures of which are hereby incorporated by reference herein. The '210 patent discloses a preinversion reactor to control particle size and the '827 patent teaches the use of initiators which do not decompose into acid by-products during the polymerization process.

The present invention provides an advancement over the known methods of minimizing acid decomposition by-products, which advancement can also be used in conjunction with the above-described patented methods to even further reduce unwanted by-products.

### SUMMARY OF THE INVENTION

The present invention comprises methods and apparatus for reducing acidic decomposition by-products in the recycle stream of polystyrene and modified polystyrene polymerization systems which methods and apparatus utilize a second devolatilizer in the process stream to concentrate the removal of unwanted acidic decomposition by-products.

### BRIEF DESCRIPTION OF THE DRAWINGS

The figures schematic flow diagrams illustrating the present invention in place in a typical high-impact polystyrene polymerization plant.

### DESCRIPTION OF THE PREFERRED EMBODIMENTS

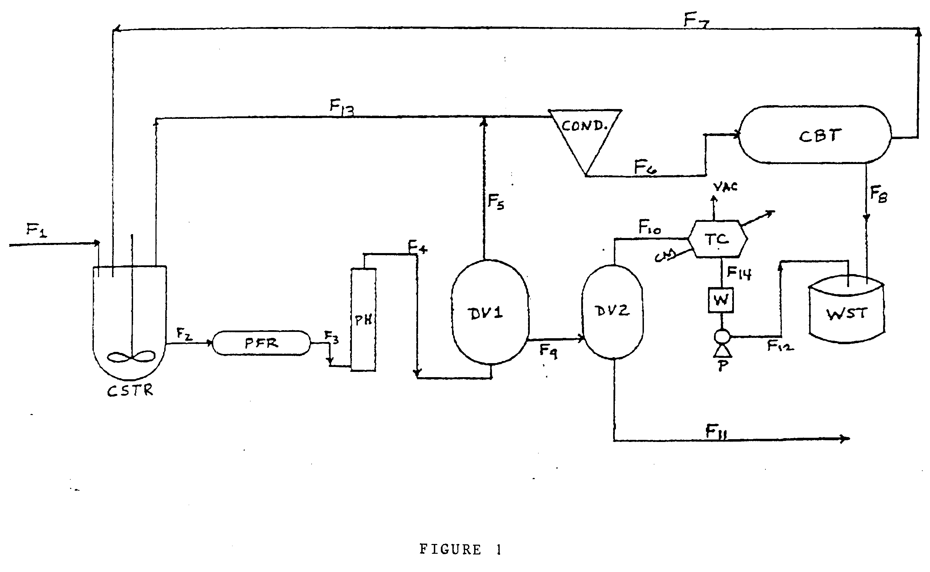

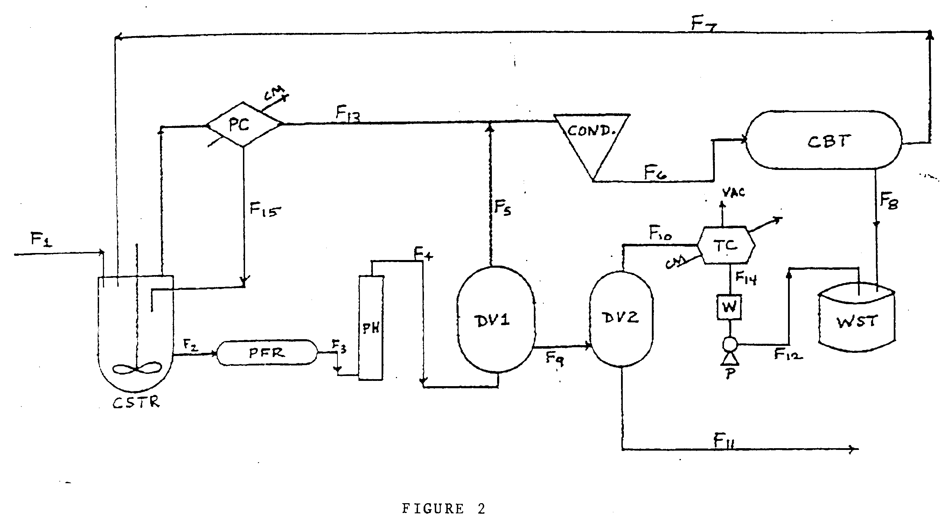

Referring now to the figure, there is illustrated therein a schematic representation of a series of reaction vessels and associated apparatus useful in the practice of styrene polymerization and more particularly in the production of rubber-modified styrene using the process of the present invention.

In the manufacture of HIPS material using this process, styrene, polybutadiene, a free-radical initiator, and additional components such as solvents, anti-oxidants, and other additives are usually fed to a polymerization reactor indicated at CSTR through a feed line or multiple feed lines generally indicated at F1. The polymerization reactor CSTR is of the type commonly referred to as a continuous stirred tank reactor. As used herein, the term "styrene" includes a variety of substituted styrenes, e.g. alpha-methylstyrene, ring-substituted styrenes, such as p-methylstyrene and p-chlorostyrene, as well as unsubstituted styrene. Typically, the mixture in polymerization reactor CSTR will comprise about 75 to 99% by weight styrene, about 1 to 15% by weight polybutadiene, about 0.001 to 0.2% by weight free-radical initiator, and about 0.1 to about 6% by weight additional components.

The reactor CSTR, as previously mentioned, is a continuously stirred tank reactor which operates at a percent solids level above the inversion of the polymer system. That is, the polymerization reactor operates at a percent solids level such that the system has a continuous phase of polystyrene and a discontinuous phase of dispersed droplets of rubber; or preferably, the droplets are a mixture of polystyrene and rubber.

The CSTR reactor is sometimes also referred to as a "boiling reactor" which means that the styrene/polystyrene/rubber mixture therein is allowed to "boil" by vaporization of the lighter components (styrene monomar, ethylbenzene, for example). This vaporizing of lighter compounds serves to remove a large amount of the heat of polymerization, and allows the operator to better control the rate of polymerization in the CSTR vessel.

The vapor components from the CSTR reactor are drawn off of the vessel and piped via line F13 to the main condenser as described hereinbelow, there to be condensed for return to the reactor via the recycle stream.

Preferably, the apparatus used in practicing the present invention may additionally comprise a second polymerization reactor of the continuous stirred tank reactor type which is operated at a preinversion condition, ie the continuous phase therein is a styrene-rubber solution and the discontinuous phase is polystyrene. The preinversion reactor (not shown) is usually located directly ahead of, or upstream of, the polymerization reactor CSTR such that the styrene, polybutadiene, free-radical initiator, and other components are fed to the preinversion reactor first and the mixture exiting the preinversion reactor is then fed to the CSTR reactor. The preinversion reactor is also preferably a continuous stirred tank reactor.

The liquids/solids output from the polymerization reactor CSTR is fed to another polymerization reactor through flow line F2 where post-inversion stage polymerization occurs. Preferably this next polymerization reactor is a linear-flown reactor, such as a plug flow reactor, but may also be a tower-type reactor or other known reactor configuration. The figure indicates a single linear-flow reactor PFR, whereas more than one linear-flow reactor may be utilized, placed in serial connection with the PFR reactor. This achieves increased polymerization in each subsequent horizontal reactor. The output from the plug flow horizontal polymerization reactors is at a temperature of around 171.1°C (340°F) and is directed to a preheater PH and from there to a conventional devolatilizer DV1 through flow lines F3 and F4, respectively. The temperature of the material leaving the preheater is preferably in the range of about 248.9°C (480°F). Unreacted It styrene monomer and other volatile residual components leave devolatilizer DV1 through overhead line F5 as a recycle stream component. This recycle stream is preferably returned to the present system after condensation in condenser COND and further treatment in clay bed treater CBT via flow line F6. The treated recycled stream then flows through flow line F7 back to the polymerization reactor CSTR. Periodically the absorbent material, whether it be clay or alumina, or other suitable material, in the treater CBT is backflushed and regenerated, with the waste material being transported via flow line F8 to waste storage tank WST.

Referring back to the output of devolatilizer DV1, in addition to the overhead recycle stream containing the aforementioned volatile components flowing through F5, the polymerization reactants, at about 99.5% solids and comprising polymerized high impact polystyrene and nonvolatile components at a temperature of about 226.6°C (440°F), flow out the lower end of DV1 through flow line F9 to a second devolatilizer DV2. In devolatilizer DV2 additional volatile components are separated and flowed out through line F10, and finished polystyrene or high impact polystyrene moves through product line F11 at a temperature of about 226.6°C (440°F) to a pelletizer or other type of finished product formulation unit.

The devolatilizer DV1 and DV2 preferably have conventional heating elements, such as external heater coils, arranged to maintain the reactant stream therein at a relatively constant temperature in the range of about 226.6°C (440°F).

The devolatilizers use a combination of the heat already in the material, heat added by the heater coils, and a vacuum in the range of about 133 to 1333 Pa (1 to 10 mm Hg) to vaporize or "boil-off" the volatiles in the stream. Preferably the first devol unit DV1 maintains a low pressure (vacuum) of around 667-1333 Pa (5-10 mm Hg) and the second devol a lower pressure (higher vacuum), in the range of only about 133 Pa (1 mm Hg).

This higher pressure (lower vacuum) in DV1 then preferentially vaporizes the desirable lower boiling point volatiles such as styrene monomer, ethylbenzene, and other aromatics and vinyl structures. On the other hand, the greater vacuum in DV2 allows the undesirable, higher boiling point volatiles to be boiled off therein, such as the oxygenated species, acids, quinones, phenols, etc.

The volatile components from DV2 flowing through line F10 are then passed through a total condenser TC which totally condenses these volatile components by means of a cooling medium CM flowing thereacross, and these condensed components are then flowed through waste line F14 to waste sump W. A pump P then pumps the waste components through line F12 to the waste storage tank WST.

The recycle streams coming off of the devolatilizers DV1 and DV2 contain a variety of impurities. The major impurities in these streams can be traced to products of reactions between species necessarily present in the recycle stream, such as styrene monomer and anti-oxidant, impurities from the rubber, and unwanted species in the systems, such as oxygen. Although some of the recycle stream impurities are innocuous, it has been unexpectedly discovered that certain impurities In the recycle stream adversely affect the polymerization process and/or the resultant HIPS product when the recycle stream is introduced back into the system.

In the continuous process of the present invention, polymerization of the styrene monomer is initiated by the decomposition of a free-radical initiator. Initiating radicals for the polymerization reaction are generated by the decomposition of the free-radical initiator into one or more primary radicals. The primary radical then reacts with styrene monomer to initiate polymerization.

Typically, the free-radical initiator is fed to the first polymerization reactor CSTR which is maintained at conditions under which the free-radical initiator decomposes, although it may also be provided to the aforementioned preinversion reactor ahead of the CSTR reactor or it may he introduced at the linear flow reactor PFR. The free-radical initiator may alternatively be selected such that it will not decompose in the first polymerization reactor and rather will decompose under the conditions maintained in some subsequent polymerization reactor such as the PFR or subsequent linear flow reactor. In this case, polymerization of styrene monomer in polymerization reactors can be thermally initiated. Alternatively, a combination or two or more free-radical initiators can be used, such that one free-radical initiator decomposes in the polymerization reactor CSTR and another free-radical initiator decomposes in the linear flow reactor PFR.

Decomposition of the free-radical initiator, which initiates polymerization of the styrene monomer, also produces decomposition by-products which do not participate in the polymerization reaction. In the present continuous flow process, these decomposition by-products of the tree-radical initiator are removed from the HIPS polymer in the devolatilizers DV1 and DV2 and, unless removed from the recycle stream, would be reintroduced into the polymerization reactors.

Investigation of the effects of various recycle stream components upon styrene polymerization had shown that acid decomposition by-products of free-radical initiators react with such initiators , thereby inhibiting styrene polymerization. It is believed that these acidic decomposition by-products adversely affect free-radical initiator efficiency by inducing decomposition of the free-radical initiator and/or trapping free-radicals produced by spontaneous (as opposed to induced) decomposition of the free-radical initiator. Thus, the acidic decomposition by-products decrease the number of free-radicals available to initiate polymerization of the styrene monomer, which in turn decreases the efficiency of the free-radical initiator.

Benzoic acid is one example of an acid decomposition by-product having such an adverse effect. The realization that benzoic acid in the recycle stream inhibits styrene polymerization in the presence of free-radical initiators is particularly significant since benzoic acid is a decomposition by product of t-butyl peroxybenzoate and dibenzyl peroxide, two of the most commonly used free-radical initiators in the continuous process produotion of HIPS. Benzoic acid is also produced from the air oxidation of benzylaldehyde, which in turn is produced from the oxidation of styrene. Other acidic species may be present in the polybutadiene rubber. It is well known that phenolic anti-oxidants, sulphur components, and substituted phosphites are added to protect the rubber from oxidation. The aforementioned incorporated patent U.S. 4,857,587 lists several acid-producing free-radical initiators and their corresponding acid decomposition by-products. Also shown therein is a graphical illustration of the detrimental effects of benzoic acid on styrene polymerization when using the free-radical initiator t-butyl peroxybenzoate.

According to the process of the aforementioned incorporated '587 patent, the adverse effects of acid decomposition by-products of free-radical initiators are avoided by directing the recycle stream through a recycle treatment vessel CRT interposed between the devolatilizer DV1 and the recycle stream return line F7. The recycle treatment vessel CBT, preferably comprises at least one adsorbent material, such as alumina or clay, which is capable of removing acid components from the recycle stream. Other examples of specific adsorbent materials include alumina, attapulgus clay, carbon, silica gels, and Porocel (trademark for an alumina). The size and shape of the recycle treatment vessel is determined according to standard engineering practices. Preferably the CBT is a clay-filled tower, maintained at approximately 26.6°C to 48.9°C (80 to 120°F) and about 137.9 kPa to 172.4 kPa (20 to 25 psi) pressure.

While the recycle treatment vessel CBT must be capable of removing substantially all of the acid components from the recycle stream, it is highly desirable that the adsorbent used also be capable of removing other impurities, both identified and unknown, from the recycle stream. The combined effects of all impurities, including acid decomposition by-products, upon styrene polymerization reaction rate and the average rubber particle size in the resultant HIPS polymer are significantly detrimental, and increase with an increase of the amount of impurities.

In addition to the removal of some of the acid by-products species from the volatile line off of devolatilizer DV1, it has further-been found that by proper selection of vacuum levels in the devolatilizers, a larger percentage of the undesirable products can be made to pass out through product line F9 from DV1 and into the second devolotilizer DV2 where those undesirable volatile components can be removed from the polymerized material thereby preventing overburdening of the clay bed treater while obtaining a further protection of the initial free-radical initiators.

In the present invention, the major portion (approximately 80%) of the volatile components leading from the preheater PH are removed in devolatilizer DV1 and passed through flow line F5. Approximately 20% of the removable volatiles are then removed from the polymer stream in devolatilizer DV2. Originally the volatile components from DV2 were added back into the recycle stream F5 through flow line F10. It has been found however that a major portion of the undesirable acidic by-products are removed in the volatiles of DV2 rather than DV1. More than 80% of the total volatiles are removed in DV1 and added to the recycle stream and less than 20% of the total volatiles are removed from DV2, yet the low volatile output of DV2 comprises a major portion of the acidic by-products which destroy the free-radical initiators. Therefore, it was found that rather than adding the output off devolatilizer DV2 back into the recycle stream, the clay bed treatment vessel life can be extended significantly by routing the volatiles from DV2 into a total condenser TC through flow line F10, totally condensing all of the volatiles, and removing them to a waste sump W whereupon they are pumped by pump P to the waste storage tank WST.

Thus, the loss of loss than 20% of the volatiles from the recycle stream results in removal of more than half of the undesirable acid decomposition by-products from the recycle stream, which greatly extends the life of the adsorbent material in the treatment vessel CBT.

The present invention comprises a process, and apparatus for performing the process, for manufacturing polymerized styrenics, which process includes the steps of utilizing a composition of devolatilizers to remove volatile components from the polymerized styrene material and filtering the volatile components to remove destructive acid by-products. The process encompasses a second devolatilizer downstream of a first devolatilizer for selectively removing undesirable volatile components from the finished polystyrene and, instead of recycling these undesirable volatile components, condensing them in a total condenser and pumping them to a waste storage tank. The removal of all of the volatile components from the second devolatilizer results in a loss of less than 20% of the total volatile but also results in removal of more than half of the destructive acid by-product components and a resulting decrease in the burden on the filter treatment vessel CBT.

## Claims

1. A method of producing purified polymerized monovinyl aromatic compounds characterized in comprising the steps of:
subjecting a monovinyl aromatic to polymerization conditions in a reactor vessel;
flowing from said reactor a product stream of polymerized monovinyl aromatic compounds;
subjecting said product stream to a first devolatilizer at a pressure less than atmospheric pressure and a temperature sufficient to volatilize a major portion of the lower boiling point desirable volatiles;
condensing said desirable volatiles and returning them to said polymerization reactor system;
subjecting said product stream to a second devolatilizer at a pressure less than atmospheric pressure and less than the pressure in the first devolatilizer and a temperature sufficient to volatilize a major portion of high boiling point undesirable volatiles; and
condensing said undesirable volatiles and disposing of them apart from said product stream.

2. The method according to claim 1 further comprising :
controlling the heat of reaction in said vessel by removing vaporized volatiles therefrom by means of a vapor line;
flowing said removed volatiles from said vapor line through a condenser and filter to condense said volatiles and remove undesirable species therefrom; and
recycling the condensed and filtered stream back to said reactor.

3. The method according to claim 2 further comprising :
flowing said removed volatiles from said vapor line first through a partial condenser prior to said condenser and filter;
condensing the higher boiling point volatiles therefrom in said partial condenser and returning them to said reactor; and
flowing from said partial condenser the lower boiling point volatiles to said condenser and filter.

4. The method of claim 1, wherein the temperature in both devolatilization steps are substantially the same.

5. The method of claim 1 or 4, wherein the pressure in the first devolatilization step is in the range of 667-6666 Pa (5-50 mm Hg), and the pressure in the second devolatilization step in the range of 67-667 Pa (0.5-5 mm Hg).

6. The method of claim 5, wherein the pressure in the first devolatilization step is in the range of 667-1333 Pa (5-10 mm Hg), and the pressure in the second devolatilization step is in the range of 133-267 Pa (1-2 mmhg).

7. The method of claim 5 or 6, wherein the temperature in both stages is approximately 227 ° C.

8. The method of any of the preceding claims, wherein said devolatilization steps are achieved by application of external electric-generated heat.

9. Apparatus for producing purified polymerized monovinyl aromatic compounds characterized in comprising :
a monovinyl aromatic polymerization reactor adapted to polymerize monovinyl aromatic monomer into a raw product stream;
a vapor line exiting said reactor for removing vaporized volatiles therefrom in order to remove heat of polymerization from said reactor;
a first devolatilization vessel connected to said reactor to receive said raw product stream therefrom and to volatilize the lower boiling point volatiles from said raw product stream;
a condenser connected to said vapor line and said first devolatilization vessel for condensing the volatiles therefrom;
a filter connected to said condenser for filtering undesirable components from said condensed volatiles;
a recycle line from said filter for returning filtered condensate to said reactor;
a partially purified product stream line leading from said first devolatilization vessel to a second devolatilizer;
said second devolatilizer operating at lower pressure than first devolatilizer in order to volatilize higher boiling point volatiles from the partially purified product stream;
a vapor line leading from said second devolatilizer to a waste condenser for condensing said higher boiling point volatiles;
a waste collection system connected to said filter and said waste condenser for receiving undesirable volatiles; and
a purified product stream line from said second devolatilizer for recovering purified monovinyl aromatic polymer compound.

10. The apparatus of claim 9 further comprising a partial condenser and recycle line located in said vapor line for condensing the higher boiling point volatiles from said line and returning them to said reactor.

11. The apparatus of claim 9 or 10, wherein said first and second devolatilizers operate at about the same temperature.

12. The apparatus of claim 9, 10 or 11, wherein said first devolatilizer operates at about 667-6666 Pa (5-50 mm Hg) pressure and said second devolatilizer operates at about 67-667 Pa (0.5-5 mm Hg) pressure.

13. The apparatus of claim 9, 10, 11 or 12, wherein said first and second devolatilizers are heated by external electric heaters.

14. The apparatus of claims 9-13, wherein said first devolatilizer preferably operates at a pressure of between 667-1333 Pa (5 and 10 mm Hg) and said second devolatilizer operates at a pressure of less than 267 Pa (2 mm Hg).

15. The apparatus of claims 9-14, wherein said filter comprises a clay bed treater.

## Patentansprüche

1. Verfahren zum Herstellen von gereinigten polymerisierten aromatischen Monovinylverbindungen, dadurch gekennzeichnet, daß es die Stufen umfaßt:
Aussetzen eines Monovinylaromaten Polymerisationsbedingungen in einem Reaktorkessel,
Fließen lassen eines Produkstromes von polymerisisierten aromatischen Monovinylverbindungen aus dem Reaktor,
Aussetzen des Produktstromes einem ersten Entferner von flüchtigen Bestandteilen bei einem Druck geringer als Atmosphärendruck und einer Temperatur, die ausreichend ist, einen Hauptteil von wünschenswerten flüchtigen Bestandteilen mit niedrigerem Siedepunkt zu verflüchtigen,
Kondensieren der wünschenswerten flüchtigen Bestandteile und Rückführen dieser zu dem Polymerisationsreaktorsystem,
Aussetzen des Produktstromes einem zweiten Entferner von flüchtigen Bestandteilen bei einem Druck geringer als Atmosphärendruck und geringer als der Druck in dem ersten Entferner von flüchtigen Bestandteilen, und einer Temperatur, die ausreichend ist, einen Hauptteil von unerwünschten flüchtigen Bestandteilen mit hohem Siedepunkt zu verflüchtigen und
Kondensieren der unerwünschten flüchtigen Bestandteile und Anordnen dieser getrennt von dem Produktstrom.

2. Verfahren nach Anspruch 1, ferner umfassend:
Kontrollieren der Reaktionswärme in dem Kessel durch Entfernen von verdampften flüchtigen Bestandteilen davon mittels einer Dampfleitung,
Fließen lassen der entfernten flüchtigen Bestandteile aus der Dampfleitung durch einen Kondensator und Filter unter Kondensieren der flüchtigen Bestandteile und Entfernen unerwünschter Spezies davon und
im Kreislauf führen des kondensierten und filtrierten Stroms zurück zu dem Reaktor.

3. Verfahren nach Anspruch 2, ferner umfassend:
Fließen lassen der entfernten flüchtigen Bestandteile aus der Dampfleitung zuerst durch einen Teilkondensator vor dem Kondensator und Filter,
Kondensieren der flüchtigen Bestandteile mit höherem Siedepunkt davon in dem Teilkondensator und Rückführen dieser zu dem Reaktor und
Fließen lassen der flüchtigen Bestandteile mit niedrigerem Siedepunkt aus dem Teilkondensator zu dem Kondensator und Filter.

4. Verfahren nach Anspruch 1, wobei die Temperatur in beiden' Stufen zum Entfernen flüchtiger Bestandteile im wesentlichen die gleiche ist.

5. Verfahren nach Anspruch 1 oder 4, wobei der Druck in der ersten Stufe zum Entfernen flüchtiger Bestandteile im Bereich von 667-6666 Pa (5-50 mm Hg) ist, und der Druck in der zweiten Stufe zum Entfernen flüchtiger Bestandteile im Bereich von 67-667 Pa (0,5- 5 mm Hg) .

6. Verfahren nach Anspruch 5, wobei der Druck in der ersten Stufe zum Entfernen flüchtiger Bestandteile im Bereich von 667-1333 Pa (5 - 10 mm Hg) ist, und der Druck in der zweiten Stufe zum Entfernen flüchtiger Bestandteile im Bereich von 133 - 267 Pa (1 -2 mm Hg).

7. Verfahren nach Anspruch 5 oder 6, wobei die Temperatur in beiden Stufen annähernd 227 °C ist.

8. Verfahren nach einem der vorhergehenden Ansprüche, wobei die Stufen zum Entfernen flüchtiger Bestandteile durch Anwendung von externer elektrisch erzeugter Wärme erzielt werden.

9. Vorrichtung zum Erzeugen von gereinigten polymerisierten aromatischen Monovinylverbindungen, dadurch gekennzeichnet, daß sie umfaßt :
einen Monovinylaromatenpolymerisationsreaktor, angepaßt, aromatisches Monovinylmonomer in einen Rohproduktstrom zu polymerisieren,
eine Dampfleitung, die aus dem Reaktor austritt, zum Entfernen von verdampften flüchtigen Bestandteilen davon, um Polymerisationswärme aus dem Reaktor zu entfernen,
einen ersten Kessel zum Entfernen flüchtiger Bestandteile, verbunden mit dem Reaktor, zum Aufnehmen des Rohproduktstromes davon und zum Verflüchtigen der flüchtigen Bestandteile mit niedrigerem Siedepunkt aus dem Rohproduktstrom,
einen Kondensator, verbunden mit der Dampfleitung und dem ersten Kessel zum Entfernen von flüchtigen Bestandteilen, zum Kondensieren der flüchtigen Bestandteile daraus,
ein Filter, verbunden mit dem Kondensator, zum Filtrieren von unerwünschten Komponenten aus den kondensierten flüchtigen Bestandteilen,
eine Kreislaufleitung von dem Filter zum Rückführen von filtriertem Kondensat zu dem Reaktor,
eine Leitung für teilweise gereinigten Produktstrom, die von dem ersten Kessel zum Entfernen flüchtiger Bestandteile zu einem zweiten Entferner von flüchtigen Bestandteilen führt,
wobei der zweite Entferner von flüchtigen Bestandteilen bei geringerem Druck arbeitet als der erste Entferner von flüchtigen Bestandteilen, um flüchtige Bestandteile mit höherem Siedepunkt aus dem teilweise gereinigten Produktstrom zu verflüchtigen,
eine Dampfleitung, die von dem zweiten Entferner von flüchtigen Bestandteilen zu einem Abfallkondensator zum Kondensieren der flüchtigen Bestandteile mit höherem Siedepunkt führt,
ein Abfallsammelsystem, verbunden mit dem Filter und dem Abfallkondensator zum Aufnehmen unerwünschter flüchtiger Bestandteile und
eine Leitung für gereinigten Produktstrom von dem zweiten Entferner von flüchtigen Bestandteilen zum Gewinnen von gereinigter aromatischer Monovinylpolymerverbindung.

10. Vorrichtung nach Anspruch 9, ferner umfassend einen Teilkondensator und Kreislaufleitung, angeordnet in der Dampfleitung zum Kondensieren der flüchtigen Bestandteile mit höherem Siedepunkt aus der Leitung und Rückführen dieser zu dem Reaktor.

11. Vorrichtung nach Anspruch 9 oder 10, wobei die ersten und zweiten Entferner von flüchtigen Bestandteilen bei etwa der gleichen Temperatur arbeiten.

12. Vorrichtung nach Anspruch 9, 10 oder 11, wobei der erste Entferner von flüchtigen Bestandteilen bei etwa 667 - 6666 Pa (5-50 mm Hg) Druck arbeitet, und der zweite Entferner von flüchtigen Bestandteilen bei etwa 67 - 667 Pa (0,5 - 5 mm Hg) Druck arbeitet.

13. Vorrichtung nach Anspruch 9, 10, 11 oder 12, wobei die ersten und zweiten Entferner von flüchtigen Bestandteilen durch externe elektrische Heizgeräte erhitzt werden.

14. Vorrichtung nach Ansprüchen 9 - 13, wobei der erste Entferner von flüchtigen Bestandteilen vorzugsweise bei einem Druck zwischen 667 - 1333 Pa (5 und 10 mm Hg) arbeitet, und der zweite Entferner von flüchtigen Bestandteilen bei einem Druck von weniger als 267 Pa (2 mm Hg) arbeitet.

15. Vorrichtung nach Ansprüchen 9 - 14, wobei das Filter einen Tonbettbehandler umfaßt.

## Revendications

1. Procédé pour préparer des composés monovinylaromatiques polymérisés purifiés, caractérisé en ce qu'il comprend les étapes consistant à:
soumettre un composé monovinylaromatique à des conditions de polymérisation dans un récipient de réaction;
faire en sorte que s'écoule dudit réacteur, un courant de produit de composés monovinylaromatiques polymérisés;
soumettre ledit courant de produit à l'action d'un premier dispositif de suppression des produits volatils sous une pression inférieure à la pression atmosphérique et à une température suffisante pour évaporer une portion majeure des produits volatils désirables à bas points d'ébullition;
condenser lesdits produits volatils désirables et les renvoyer dans ledit système de réacteur de polymérisation;
soumettre ledit courant de produit à l'action d'un second dispositif de suppression des produits volatils sous une pression inférieure à la pression atmosphérique et inférieure à la pression régnant dans le premier dispositif de suppression des produits volatils et à une température suffisante pour évaporer une portion majeure des produits volatils indésirables à points d'ébullition élevés; et
condenser lesdits produits volatils indésirables et les évacuer dudit courant de produit.

2. Procédé selon la revendication 1, comprenant en outre le fait de:
régler la chaleur de la réaction dans ledit récipient en éliminant de ce dernier les produits volatils transformés en vapeur, à l'aide d'un conduit de vapeur;
faire en sorte que lesdits produits volatils éliminés dudit conduit de vapeur s'écoulent à travers un condenseur et à travers un filtre pour condenser lesdits produits volatils et en éliminer l'espèce indésirable; et
recycler le courant condensé et filtré en retour dans ledit réacteur.

3. Procédé selon la revendication 2, comprenant en outre le fait de:
faire en sorte que lesdits produits éliminés dudit conduit de vapeur s'écoulent d'abord à travers un condenseur partiel avant de les faire s'écouler à travers ledit condenseur et ledit filtre;
condenser, à partir de ces derniers, les produits volatils à points d'ébullition élevés, dans ledit condenseur partiel et les renvoyer audit réacteur; et
faire en sorte que les produits volatils à bas points d'ébullition s'écoulent depuis ledit condenseur partiel jusqu'audit condenseur et audit filtre.

4. Procédé selon la revendication 1, dans lequel la température régnant dans les deux étapes de suppression des produits volatils est essentiellement la même.

5. Procédé selon la revendication 1 ou 4, dans lequel la pression régnant dans la première étape de suppression des produits volatils se situe dans le domaine de 667-6666 Pa (5-50 mm Hg) et la pression régnant dans la seconde étape de suppression des produits volatils se situe dans le domaine de 67-667 Pa (0,5-5 mm Hg).

6. Procédé selon la revendication 5, dans lequel la pression régnant dans la première étape de suppression des produits volatils se situe dans le domaine de 667-1333 Pa (5-10 mm Hg) et la pression régnant dans la seconde étape de suppression des produits volatils se situe dans le domaine de 133-267 Pa (1-2 mm Hg) .

7. Procédé selon la revendication 5 ou 6, dans lequel la température régnant dans les deux étapes s'élève approximativement à 227°C.

8. Procédé selon l'une quelconque des revendications précédentes, dans lequel on effectue lesdites étapes de suppression des produits volatils en appliquant une chaleur externe générée par voie électrique.

9. Appareil pour préparer des composés monovinylaromatiques polymérisés purifiés, caractérisé en ce qu'il comprend:
un réacteur de polymérisation des produits monovinylaromatiques conçu pour polymériser des monomères monovinylaromatiques pour obtenir un courant de produit brut ;
un conduit de vapeur quittant ledit réacteur pour en éliminer les produits volatils évaporés dans le but d'éliminer la chaleur de polymérisation dudit réacteur ;
un premier récipient de suppression des produits volatils raccordé audit réacteur pour en recevoir ledit courant de produit brut et pour évaporer les produits volatils à bas points d'ébullition dudit courant de produit brut;
un condenseur raccordé audit conduit de vapeur et audit premier récipient de suppression des produits volatils pour condenser les produits volatils qui en émanent ;
un filtre raccordé audit condenseur pour filtrer des composants indésirables desdits produits volatils condensés;
un conduit de recyclage émanant dudit filtre pour renvoyer le condensat filtré audit réacteur;
un conduit destiné au courant de produit partiellement purifié menant audit premier récipient de suppression des produits volatils jusqu'à un second dispositif de suppression des produits volatils;
ledit second dispositif de suppression des produits volatils travaillant à une pression inférieure à celle régant dans le premier dispositif de suppression des produits volatils dans le but d'évaporer les produits volatils à points d'ébullition élevés du courant de produit partiellement purifié;
un conduit de vapeur menant depuis ledit second dispositif de suppression des produits volatils jusqu'à un condenseur de déchets pour condenser lesdits produits volatils à points d'ébullition élevés;
un système de récolte des déchets raccordé audit filtre et audit condenseur de déchets pour recevoir les produits volatils indésirables; et
un conduit destiné au courant de produit purifié provenant dudit second dispositif de suppression des produits volatils pour récupérer un composé polymère monovinylaromatique purifié.

10. Appareil selon la revendication 9, comprenant en outre un condenseur partiel et un conduit de recyclage disposé dans ledit conduit de vapeur pour condenser les produits volatils à points d'ébullition élevés provenant dudit conduit et pour les renvoyer audit réacteur.

11. Appareil selon la revendication 9 ou 10, dans lequel lesdits premier et second dispositifs de suppression des produits volatils travaillent approximativement à la même température.

12. Appareil selon la revendication 9, 10 ou 11, dans lequel ledit premier dispositif de suppression des produits volatils travaille sous une pression d'environ 667-6666 Pa (5-50 mm Hg) et ledit second dispositif de suppression des produits volatils travaille sous une pression d'environ 67-667 Pa (0,5-5 mm Hg).

13. Appareil selon la revendication 9, 10, 11 ou 12, dans lequel lesdits premier et second dispositifs de suppression des produits volatils sont chauffés via des dispositifs de chauffage électriques externes.

14. Appareil selon les revendications 9 à 13, dans lequel ledit premier dispositif de suppression des produits volatils travaille de préférence sous une pression entre 667 et 1333 Pa (5 et 10 mm Hg) et ledit second dispositif de suppression des produits volatils travaille sous une pression inférieure à 267 Pa (2 mm Hg).

15. Appareil selon les revendications 9 à 14, dans lequel ledit filtre comprend un dispositif de traitement à lit d'argile.
